# EUROPÄISCHE PATENTANMELDUNG

(11) **EP 2 916 085 A1**
(43) Veröffentlichungstag der Anmeldung: **09.09.2015**
(21) Anmeldenummer: 14157720.5
(22) Anmeldetag: 04.03.2014
(51) Int. Cl.: F24J 2/52, E04F 13/00

(54) **Befestigungselement**

(71) Anmelder: RMG - Rieder Management Ges.m.b.H., 5751 Maishofen (AT)
(72) Erfinder: Bauer, Martin, 83059 Vogtareuth (DE); Berger, Guido, 33378 Rheda-Wiedenbrück (DE)
(74) Vertreter: Schwarz & Partner

(57) **Zusammenfassung**

Befestigungselement (2), umfassend zwei Schenkel (4, 6), wobei die beiden Schenkel (4, 6) über einen Steg (8) miteinander verbunden sind, wobei zumindest ein Schenkel (4, 6) zumindest eine Ausnehmung (10, 12) aufweist, wobei eine Scheibe (14) vorgesehen ist, welche im Steg (8) mittels eines Drehelements (22) um eine Drehachse (16) drehbar gelagert ist, wobei die Scheibe (14) derart ausgebildet ist, dass sie bei Drehung um die Drehachse (16) in einer ersten Position zwischen den beiden Schenkel (4, 6) angeordnet ist und in einer zweiten Position bereichsweise durch die Ausnehmung (10, 12) durchragt, wobei die Scheibe (14) weiters zumindest einen Fortsatz (18, 20) aufweist, der bei Drehung der Scheibe (14) um die Drehachse (16) von der ersten Position in die zweite Position vor Erreichen der zweiten Position in Kontakt mit einem Schenkel (4,6) gebracht wird.

## Beschreibung

Die vorliegende Erfindung betrifft ein Befestigungselement für ein Bauelement. Weiters betrifft die Erfindung eine Anordnung aus Befestigungselement und Bauelement.

Im Stand der Technik sind zahlreiche Möglichkeiten bekannt, um großflächige Bauelemente, wie z.B. Fassadenelemente, an einem Untergrund zu befestigen. Klebeverbindungen ermöglichen eine einfache und rasche Befestigung, sie sind aber unzureichend für Dauerbelastungen, beispielsweise durch Wind. Herkömmliche Schraubverbindungen ermöglichen wiederum eine sehr stabile Befestigung zwischen Bauelemente und Untergrund, allerdings ist die Anbringung von zahlreichen Schraubverbindungen mit einem hohen Zeitaufwand verbunden.

Die vorliegende Erfindung hat sich zur Aufgabe gestellt, ein Befestigungselement bereit zu stellen, welches eine sehr stabile Befestigung mit einem Bauelement ermöglicht und welches eine rasche Befestigung ermöglicht.

Diese Aufgabe wird gelöst durch ein Befestigungselement, umfassend zwei Schenkel, wobei die beiden Schenkel über einen Steg miteinander verbunden sind, wobei zumindest ein Schenkel zumindest eine Ausnehmung aufweist, wobei eine Scheibe vorgesehen ist, welche im Steg mittels eines Drehelements um eine Drehachse drehbar gelagert ist, wobei die Scheibe derart ausgebildet ist, dass sie bei Drehung um die Drehachse in einer ersten Position zwischen den beiden Schenkel angeordnet ist und bei Drehung um die Drehachse in einer zweiten Position bereichsweise durch die Ausnehmung durchragt, wobei die Scheibe weiters zumindest einen Fortsatz aufweist, der bei Drehung der Scheibe um die Drehachse von der ersten Position in die zweite Position vor Erreichen der zweiten Position in Kontakt mit einem Schenkel gebracht wird.

Die beiden Schenkel dienen in diesem Befestigungselement als Anlageflächen am Bauelement. Das Bauelement weist einen Kanal auf, in den das Befestigungselement mit den beiden Schenkeln eingebracht wird. Durch Drehung des Drehelements um die Drehachse wird die Scheibe von der ersten Position in die zweite Position gebracht. Dabei rotiert die Scheibe um die Drehachse und bewegt sich aus der Position zwischen den Schenkeln in eine Position, bei der die Scheibe zumindest in eine Ausnehmung hineinragt und dann mit einem Abschnitt durch die Ausnehmung hindurchragt. Durch den Fortsatz in der Scheibe wird bei Drehung der Scheibe um die Drehachse dieser zur Anlage an einem der Schenkel gebracht. Bei weiterer Drehung des Drehelements verspreizt sich der Fortsatz mit dem Schenkel und drückt diesen von der Drehachse weg. Auf diese Art wird eine kraftschlüssige Verbindung zwischen dem Kanal des Bauelements und dem Befestigungselement hergestellt.

Ist der Kanal des Bauelements im Wesentlichen formschlüssig mit den beiden Schenkeln, kann die Scheibe entweder eine Kerbe in den Kanal des Bauelements bei geeigneter Materialkombination hineindrücken (z.B. Kanal aus einem weicheren Werkstoff wie die Scheibe). Es kann aber im Kanal des Bauelements selbst eine Kerbe vorgesehen sein, in die die Scheibe eingreift, sodass so ein Verschieben des Befestigungselements zusätzlich verhindert wird. Die eingebrachten Fortsätze in der Scheibe verhindern das Durchdrehen der Scheibe im Falle dass aufgrund höherer Toleranzen bei der Fertigung die Nuten in den Schenkeln tiefer sind und keinen entsprechenden Widerstand gegen das Druchdrehen der Scheibe bieten.

In einer bevorzugten Ausführungsvariante ist vorgesehen, dass beide Schenkel jeweils zumindest eine Ausnehmung aufweisen. Damit ist es möglich, dass die Scheibe in der ersten Position zwischen den beiden Schenkel anordenbar ist. Durch Verdrehen in die zweite Position durchsetzt die Scheibe bereichsweise die Ausnehmungen und steht auf beiden Seiten der beiden Schenkel über die Ausnehmung hinaus.

Besonders bevorzugt ist vorgesehen, dass die Scheibe zwei Fortsätze aufweist, von denen jeder vor Erreichen der zweiten Position in Kontakt mit einem der beiden Schenkel gebracht wird. Damit erfolgt eine symmetrische Kraftübertragung vom Befestigungselement auf das Bauelement.

In einer Ausführungsvariante ist vorgesehen, dass die Scheibe oval ausgebildet ist. Beispielsweise kann diese ellipsenförmig ausgebildet sein. Dies stellt eine einfache und kostengünstige Lösung dar, um die Scheibe so auszugestalten, dass sie in der ersten Position zwischen den Schenkeln bleibt und in der zweiten Position durch zumindest eine Ausnehmung hindurchragt.

Das Drehelement umfasst bevorzugt eine Zylinderschraube. Diese weist bevorzugt einen Schraubenkopfantrieb auf, um z.B. mit einem Schraubendreher oder Schraubenschlüssel eine Drehung um die Drehachse vornehmen zu können. Als praktikabel hat es sich erwiesen, wenn das Drehelement in einer Führungsschiene angeordnet ist.

In einer einfachen und bevorzugten Ausführungsvariante ist vorgesehen, dass die beiden Schenkel im Wesentlichen parallel angeordnet sind

Weiters kann vorgesehen sein, dass der Steg im Wesentlichen rechtwinklig zu den beiden Schenkeln angeordnet ist

Es kann vorgesehen sein, dass die beiden Schenkel über den Steg hinausreichen und auf der der Scheibe gegenüberliegenden Seite jeweils einen Anlageabschnitt aufweisen.

Das Befestigungselement kann direkt an das zu montierende Element gekoppelt sein. Es kann aber auch vorgesehen sein, dass das Befestigungselement einen Koppelabschnitt für das zu montierende Element aufweist. In diesem Fall kann vorgesehen sein, dass der Koppelabschnitt auf dem Drehelement angeordnet ist. Beispielsweise kann das Drehelement eine Zylinderschraube mit einem Gewindeabschnitt aufweisen, mit dem das zu montierende Element befestigbar ist.

Weiters ist erfindungsgemäß eine Anordnung, umfassend ein Befestigungselement und ein Bauteil mit einem um Wesentlichen U-förmigen Kanal, in welches das Befestigungselement in der zweiten Position kraftschlüssig einbringbar ist, vorgesehen.

Bei dieser Anordnung kann vorgesehen sein, dass das Befestigungselement in den im Wesentlichen U-förmigen Kanal in der ersten Position im Wesentlichen formschlüssig einbringbar ist.

Nachfolgend wird anhand eines Beispiels die Erfindung unter Zuhilfenahme von Figuren näher erläutert.
- Fig. 1: zeigt eine Schrägansicht eines Befestigungselements.
- Fig. 2: zeigt eine Explosionsdarstellung des Befestigungselements.
- Fig. 3a - 3f: zeigt die Scheibe in Draufsicht (Fig. 3a) und zwei Seitenansichten (Fig. 3b, 3c) sowie die die Schenkel und den Steg des Befestigungselements in drei Ansichten (3d bis 3f).
- Fig. 4 - 9: zeigt die Schrittweise Einbringung des Befestigungselements in den Kanal eines Bauelements.

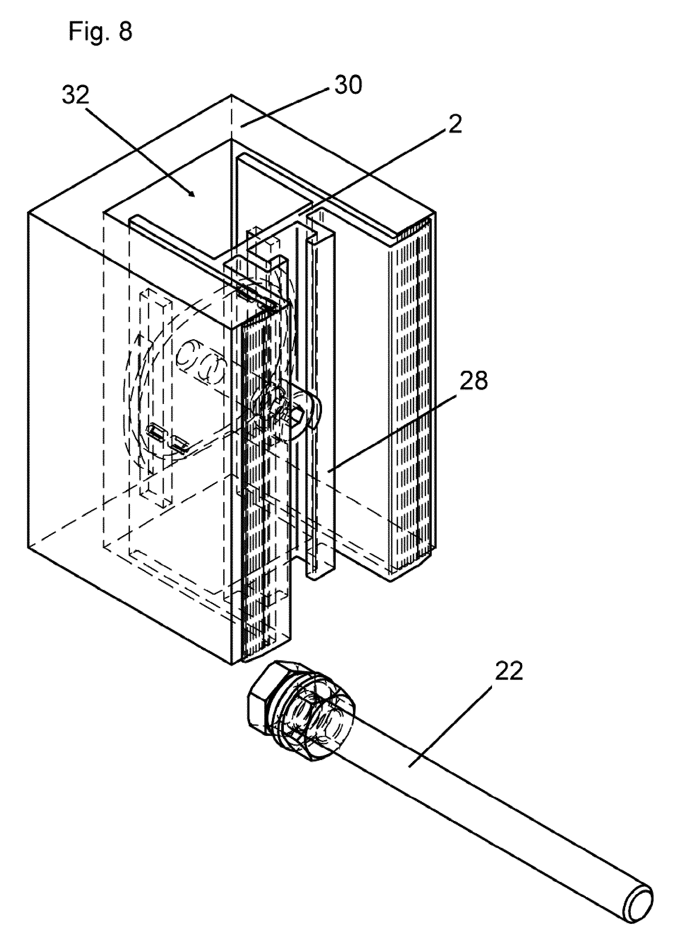

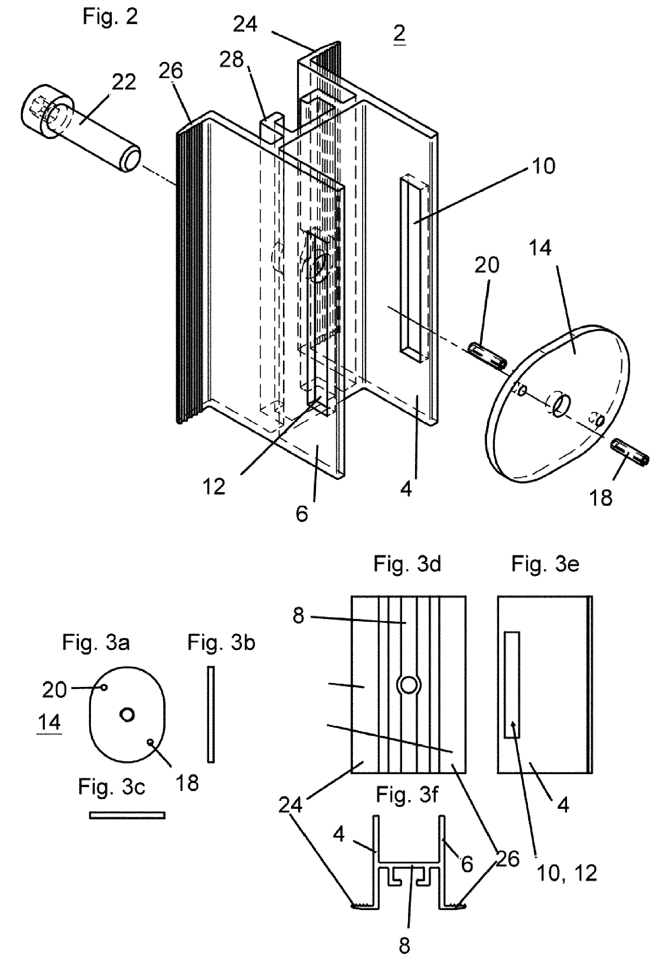

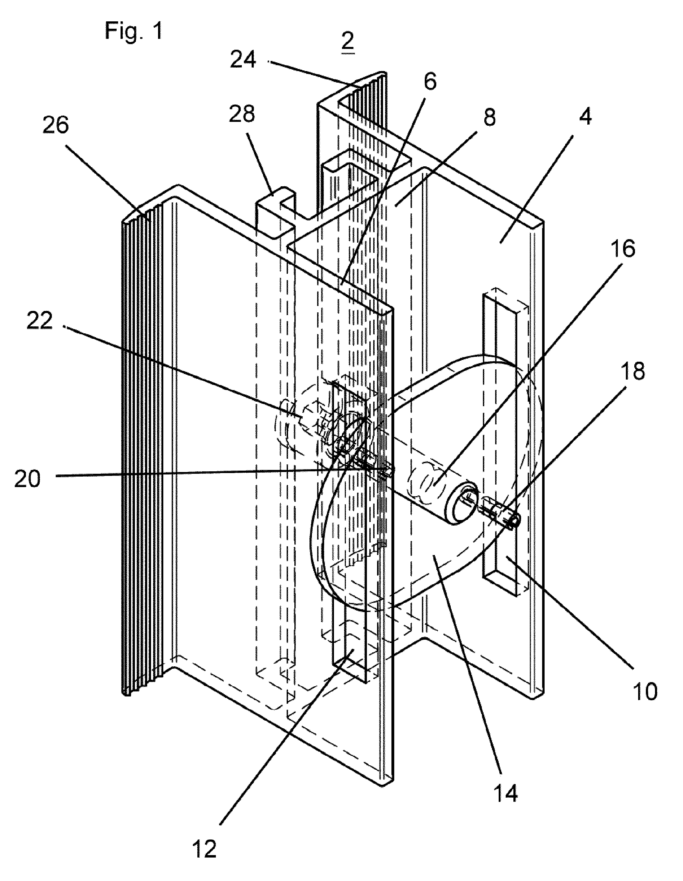

Die Fig. 1 bis 9 beschreiben anhand eines konkreten Beispiels die einzelnen Elemente sowie die Einzelschritte für die Verrastung des Befestigungselements im Kanal eines Bauelements. Es werden daher alle Figuren gemeinsam beschrieben und es erklärt sich von selbst, dass Bauteile mit demselben Bezugszeichen in der einen Figur auch dieselben Bauteile in einer anderen Figur sind. Aus Übersichtlichkeitsgründen wurde bei einigen Figuren auf die Eintragung der Bezugszeichen verzichtet. Sämtliche Figuren beziehen sich auf dasselbe Beispiel.

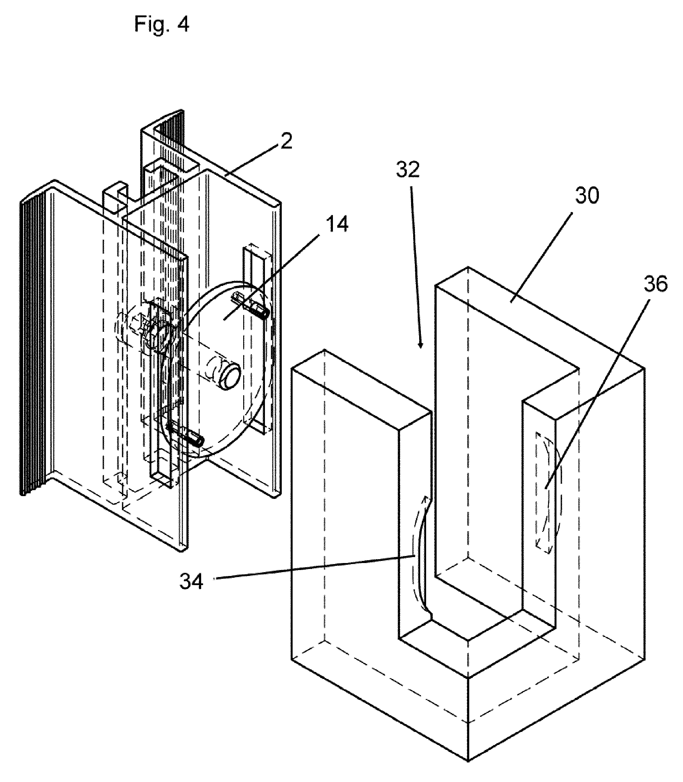

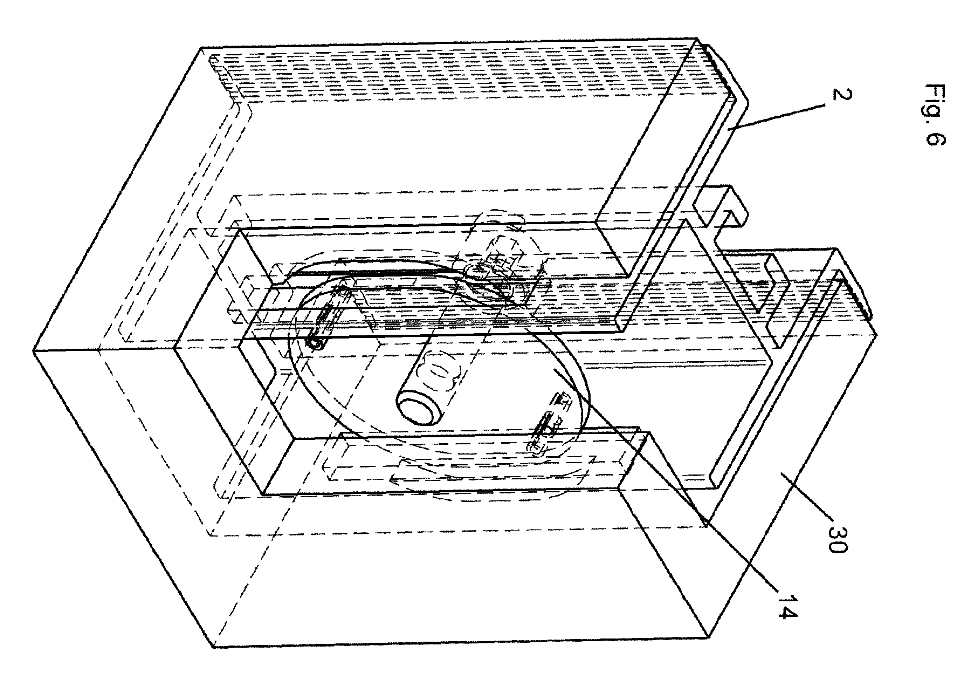

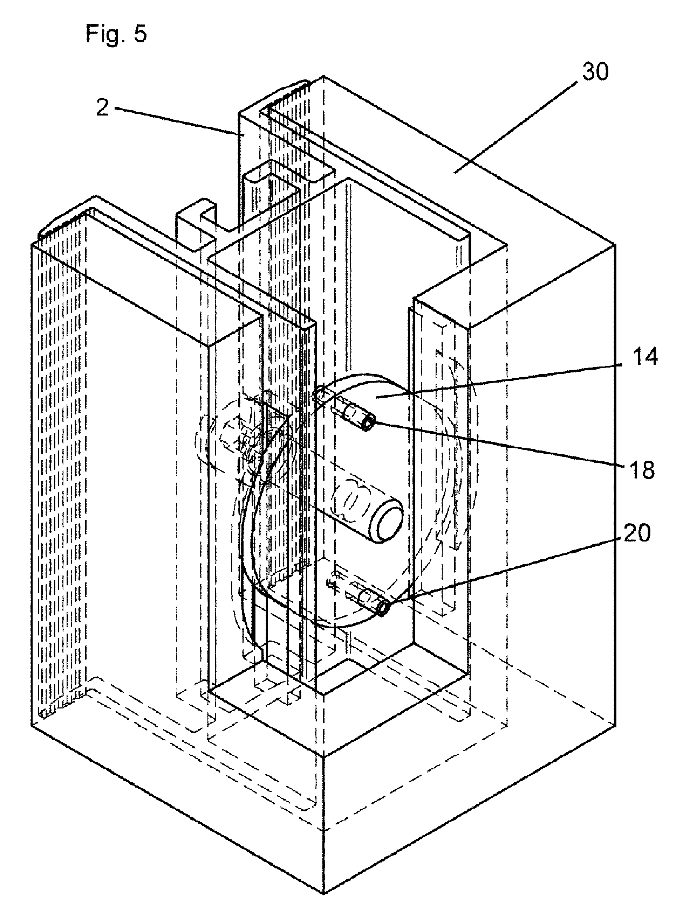

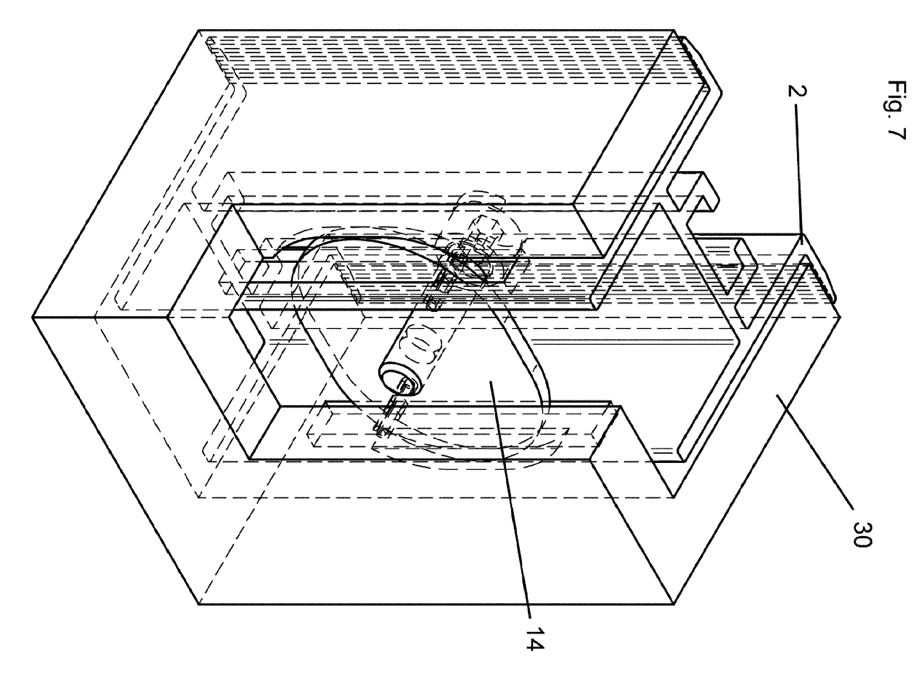

Fig. 1 zeigt das Befestigungselement 2, umfassend zwei Schenkel 4, 6, welche über einen Steg 8 miteinander verbunden sind. Beide Schenkel 4, 6 weisen jeweils eine Ausnehmung 10, 12 auf. Weiters ist eine Scheibe 14 vorgesehen, welche im Steg 8 mittels eines Drehelements 22 um eine Drehachse 16 drehbar gelagert ist. Die Scheibe 14 ist derart ausgebildet, dass sie bei Drehung um die Drehachse 16 in einer ersten Position zwischen den beiden Schenkel 4, 6 angeordnet ist (siehe insbesondere Fig. 4 und 5) und in einer zweiten Position bereichsweise durch jede der beiden Ausnehmungen 10, 12 durchragt (siehe insbesondere Fig. 7). Die Scheibe 14 weist weiters zwei Fortsätze 18, 20 auf, die bei Drehung der Scheibe 14 um die Drehachse 16 von der ersten Position in die zweite Position vor Erreichen der zweiten Position in Kontakt mit dem jeweiligen Schenkel 4,6 gebracht werden (siehe Fig. 6). Bei weiterer Drehung verspreizen sich die Fortsätze 18, 20 mit den Schenkeln 4, 6 und pressen diese nach Außen gegen das Bauelement 30. Das Bauelement 30 weist einerseits einen U-förmigen Kanal 32, in welchen das Befestigungselement 2 einbringbar ist, und andererseits Kerben 34, 36 für die Scheibe 14 auf.

Die beiden Schenkel 4, 6 sind im Wesentlichen parallel angeordnet. Der Steg 8 ist im Wesentlichen rechtwinklig zu den beiden Schenkeln 4, 6 angeordnet. Die beiden Schenkel 4, 6 reichen über den Steg 8 hinaus. Weiters weisen die Schenkel 4, 6 auf der der Scheibe 14 gegenüberliegenden Seite jeweils einen Anlageabschnitte 24, 26 auf. Die beiden Schenkel 4, 6 bilden mit dem Steg 8 einen im Wesentlichen H-förmigen Abschnitt.

Die Scheibe 14 ist oval, und zwar ellipsenförmig ausgebildet. Die beiden Fortsätze 18, 20 sind als gerade Kreiszylinder ausgebildet. Die Höhe dieser Kreiszylinder ist parallel zur Drehachse 16 angeordnet.

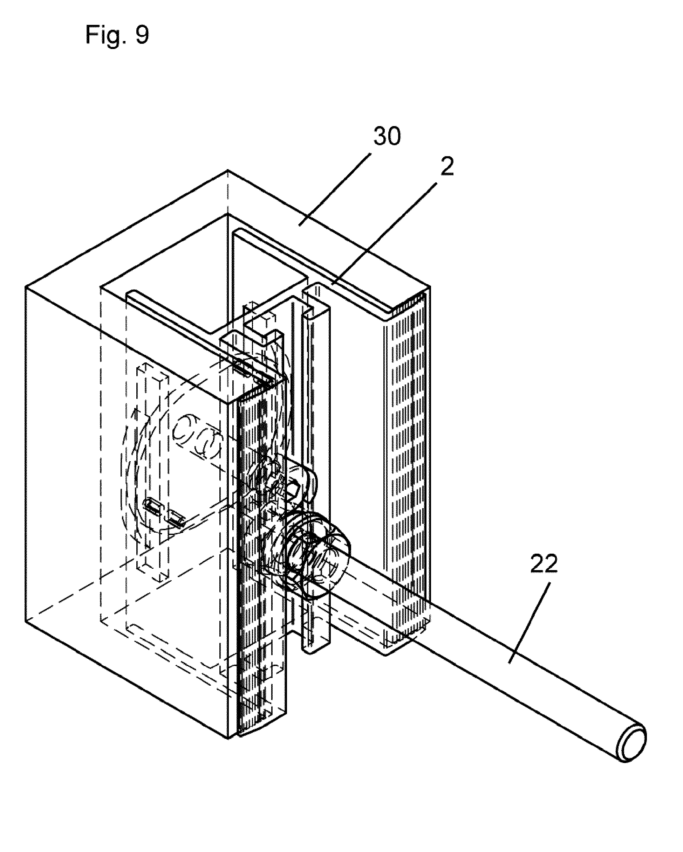

Wie in Fig. 9 besonders deutlich erkennbar, weist das Drehelement 22 eine Zylinderschraube auf. Das Drehelement 22 ist teilweise in einer Führungsschiene angeordnet.

Das Befestigungselement 2 weist einen Koppelabschnitt 28 auf, der dem Drehelement 22 angeordnet ist.

Die Fig. 4 bis 9 demonstrieren, wie eine erfindungsgemäße Anordnung bereit gestellt wird, indem in das Bauelement mit 30 einem U-förmigen Kanal 32 das Befestigungselement 2 eingesetzt wird. Durch Drehung des Drehelements 22 wird die Scheibe 14 über die Fortsätze 18, 20 mit den Schenkeln verspreizt, sodass sich diese von der Drehachse weg bewegen und mit dem Kanal 32 einen Form- und Kraftschluss bilden.

Das Befestigungselement kann aus Materialien gefertigt sein, die dem entsprechenden Bedarf angepasst sind. Beispielsweise kann es Metall wie Aluminium umfassen, wobei dann bevorzugt Steg und Schenkel stranggepresst sind. Das Drehelement 22 kann ebenfalls aus Metall bestehen, beispielsweise Stahl oder Aluminium. Das Bauelement kann beispielsweise ein dekoratives Element, z.B. aus Beton sein oder ein funktionales Element, wie z.B. ein Solarkollektor.

## Patentansprüche

1. Befestigungselement (2), umfassend zwei Schenkel (4, 6), wobei die beiden Schenkel (4, 6) über einen Steg (8) miteinander verbunden sind, wobei zumindest ein Schenkel (4, 6) zumindest eine Ausnehmung (10, 12) aufweist, wobei eine Scheibe (14) vorgesehen ist, welche im Steg (8) mittels eines Drehelements (22) um eine Drehachse (16) drehbar gelagert ist, wobei die Scheibe (14) derart ausgebildet ist, dass sie bei Drehung um die Drehachse (16) in einer ersten Position zwischen den beiden Schenkel (4, 6) angeordnet ist und in einer zweiten Position bereichsweise durch die Ausnehmung (10, 12) durchragt, wobei die Scheibe (14) weiters zumindest einen Fortsatz (18, 20) aufweist, der bei Drehung der Scheibe (14) um die Drehachse (16) von der ersten Position in die zweite Position vor Erreichen der zweiten Position in Kontakt mit einem Schenkel (4,6) gebracht wird.

2. Befestigungselement nach Anspruch 1, **dadurch gekennzeichnet, dass** beide Schenkel (4, 6) jeweils zumindest eine Ausnehmung (10, 12) aufweisen

3. Befestigungselement nach Anspruch 1 oder Anspruch 2, **dadurch gekennzeichnet, dass** die Scheibe (14) in der zweiten Position bereichsweise durch Ausnehmungen (10, 12) beider Schenkel (4, 6) reichen.

4. Befestigungselement nach einem der Ansprüche 1 bis 3, **dadurch gekennzeichnet, dass** die Scheibe (14) zwei Fortsätze (18, 20) aufweist, von denen jeder vor Erreichen der zweiten Position in Kontakt mit einem der beiden Schenkel (4, 6) gebracht wird.

5. Befestigungselement nach einem der Ansprüche 1 bis 4, **dadurch gekennzeichnet, dass** die Scheibe (14) oval ausgebildet ist.

6. Befestigungselement nach einem der Ansprüche 1 bis 5, **dadurch gekennzeichnet, dass** das Drehelement (22) eine Zylinderschraube umfasst.

7. Befestigungselement nach einem der Ansprüche 1 bis 6, **dadurch gekennzeichnet, dass** die beiden Schenkel (4, 6) im Wesentlichen parallel angeordnet sind

8. Befestigungselement nach einem der Ansprüche 1 bis 7, **dadurch gekennzeichnet, dass** der Steg (8) im Wesentlichen rechtwinklig zu den beiden Schenkel (4, 6) angeordnet ist

9. Befestigungselement nach einem der Ansprüche 1 bis 8, **dadurch gekennzeichnet, dass** das Drehelement (22) in einer Führungsschiene (28) angeordnet ist.

10. Befestigungselement nach einem der Ansprüche 1 bis 9, **dadurch gekennzeichnet, dass** die beiden Schenkel (4, 6) über den Steg (8) hinausreichen und auf der der Scheibe (14) gegenüberliegenden Seite einen Anlageabschnitt (24, 26) aufweisen.

11. Befestigungselement nach einem der Ansprüche 1 bis 10, **dadurch gekennzeichnet, dass** die beiden Schenkel (4, 6) mit dem Steg (8) einen im Wesentlichen H-förmigen Abschnitt bilden.

12. Befestigungselement nach einem der Ansprüche 1 bis 11, **dadurch gekennzeichnet, dass** das Befestigungselement (2) einen Koppelabschnitt (29) aufweist.

13. Befestigungselement nach Anspruch 12, **dadurch gekennzeichnet, dass** der Koppelabschnitt (29) auf dem Drehelement (22) angeordnet ist.

14. Anordnung, umfassend ein Befestigungselement (2) und ein Bauteil (30) mit einem um Wesentlichen U-förmigen Kanal (32), in welches das Befestigungselement (2) in der zweiten Position kraftschlüssig einbringbar ist.

15. Anordnung nach Anspruch 14, **dadurch gekennzeichnet, dass** das Befestigungselement (2) in den im Wesentlichen U-förmigen Kanal (32) in der ersten Position im Wesentlichen formschlüssig einbrinbar ist.
